# EUROPÄISCHE PATENTSCHRIFT

(11) **EP 1 131 196 B1**
(45) Veröffentlichungstag und Bekanntmachung des Hinweises auf die Patenterteilung: **16.04.2003**
(21) Anmeldenummer: 99958085.5
(22) Anmeldetag: 20.11.1999
(51) Int. Cl.: B29C 31/04

(54) **VERFAHREN ZUM HERSTELLEN VON SPRITZGIESSTEILEN IN EINER SPRITZGIESSMASCHINE**
METHOD OF PRODUCING INJECTION-MOLDED PARTS IN AN INJECTION-MOLDING MACHINE
PROCEDE POUR PRODUIRE DES PIECES MOULEES PAR INJECTION DANS UNE MACHINE DE MOULAGE PAR INJECTION

(30) Priorität: 20.11.1998 DE 19853582
(43) Veröffentlichungstag der Anmeldung: 12.09.2001
(73) Patentinhaber: Krauss-Maffei Kunststofftechnik GmbH, 80997 München (DE)
(72) Erfinder: SCHIEBERL, Eric, D-86199 Augsburg (DE)
(74) Vertreter: Zollner, Richard
(86) Internationale Anmeldenummer: EP9908912
(87) Internationale Veröffentlichungsnummer: WO00030824

(56) Entgegenhaltungen:
- PATENT ABSTRACTS OF JAPAN vol. 014, no. 019 (M-919), 16. Januar 1990 (1990-01-16) & JP 01 262110 A (TAKEHIRO:KK), 19. Oktober 1989 (1989-10-19)
- PATENT ABSTRACTS OF JAPAN vol. 1996, no. 11, 29. November 1996 (1996-11-29) & JP 08 174582 A (ARACO CORP), 9. Juli 1996 (1996-07-09)
- PATENT ABSTRACTS OF JAPAN vol. 016, no. 041 (M-1206), 31. Januar 1992 (1992-01-31) & JP 03 247423 A (SHOWA DENKO KK), 5. November 1991 (1991-11-05)

## Beschreibung

Die Erfindung betrifft ein Verfahren zum Herstellen von Spritzgießteilen in einer Spritzgießmaschine gemäß Oberbegriff des Patentanspruchs 1 sowie eine Vorrichtung zur Durchführung des Verfahrens gemäß dem Oberbegriff des Patentsanspruchs 3.

Eine Vorrichtung dieser Art ist aus der EP 0 658 410 A 2 bekannt, bei der über ein Heißkanalsystem, das in einer Werkzeughälfte integriert ist, die Schmelze auf die Formoberfläche einer Werkzeughälfte gebracht wird. Die andere Werkzeughälfte befindet sich dabei zunächst im Abstand zur ersten Werkzeughälfte und wird dann nach weitgehend vollständiger Belegung der Formoberfläche der ersten Werkzeughälfte mit Schmelze auf die erste Werkzeughälfte bis zur Schließposition bewegt. Die Schmelze wird dabei in einem Prägeverfahren in alle Bereiche der Werkzeugkavität verpresst. Dieses Quellflussverfahren genannte Herstellungsverfahren eignet sich besonders zur präzisen Herstellung großflächiger Spritzgießteile, es hat jedoch den Nachteil, dass sich an den Stellen, an denen die Schmelze aus dem Heißkanalsystem auf die Formoberfläche der einen Werkzeughälfte gelangt, in dem anschließenden Prägeverfahren die Schmelzeaustrittsöffnungen in Form von sogenannten Angussmarkierungen abbilden. Diese Angussmarkierungen sind insbesondere bei optischen Artikeln, wie z. B. Kunststoffscheiben für Kraftfahrzeuge, nicht akzeptabel.

Es ist grundsätzlich auch bekannt, z. B. aus der EP 0 597 219, Schmelze über die Breitschlitzdüse eines über die Formoberfläche einer Werkzeughälfte geführten Düsenkopfes flächig zu verteilen. Bei diesem Verfahren nimmt aber der Abladevorgang verhältnismäßig viel Zeit in Anspruch und erfordert ein aufwendiges Führungssystem für den Düsenkopf, beispielsweise einen Roboter.

Der Erfindung liegt daher die Aufgabe zugrunde, ein Verfahren und eine Vorrichtung anzugeben, mit denen unter Nutzung der Vorteile des vorgenannten Quellflussverfahrens am fertigen Spritzgießteil Angussmarkierungen vermieden werden können.

Die Erfindung besteht im Kern darin, daß die Funktion des bislang in einer Werkzeughälfte integrierten Heißkanalsystems, mit dem nach dem Quellflußverfahren über ein oder mehrere Austrittsöffnungen die Schmelze weitgehend gleichmäßig auf der Formoberfläche der Werkzeughälfte verteilt werden kann, von einem gesonderten Bauteil, der Heißläuferplatte, übernommen wird. Diese wird nur zur Belegung der Formoberfläche einer vorzugsweise horizontal angeordneten Werkzeughälfte mit Schmelze in das geöffnete Werkzeug eingefahren. Vor dem anschließenden Prägeprozeß wird die Heißläuferplatte herausgefahren. Durch diese Funktionsaufteilung kann die Formoberfläche der flächig mit Schmelze zu belegenden Werkzeughälfte frei von Angußöffnungen gehalten werden.

Die Funktionsaufteilung bietet auch den Vorteil, daß jedes Funktionsteil, nämlich das Formwerkzeug einerseits und die Heißläuferplatte andererseits, auf der für seine Funktionserfüllung optimalen Temperatur gehalten werden kann.

Die Heißläuferplatte kann in beliebiger Weise mit den erforderlichen Nadelverschlußdüsen ausgestattet sein. Es ergibt sich dabei der Vorteil, daß eine universell mit Nadelverschlußdüsen ausgestattete Heißläuferplatte zur Schmelzebelegung der Formoberflächen unterschiedlicher Werkzeughälften verwendet werden kann, wobei jeweils nur das Ansteuerungsprofil für die Nadelverschlußdüsen zu verändern ist. Bei mehreren unterschiedlichen Werkzeugen und einer universell einsetzbaren Heiläuferplatte ergibt sich somit eine Kostenersparnis.

In einer bevorzugten Ausführungsform ist die Heißläuferplatte mit einer Werkzeughälfte gekoppelt. Dabei kann im Wechseltakt mit der Heißläuferplatte die Formoberfläche der anderen Werkzeughälfte mit Schmelze belegt werden und gleichzeitig kann bei der mit der Heißläuferplatte gekoppelten Werkzeughälfte das fertige Spritzgießteil außerhalb des Schließbereichs der Werkzeughälften entnommen werden. Anschließend können zu umspritzende Teile, wie z.B. ein Rahmenteil einer Automobilscheibe, in die bewegliche Werkzeughälfte eingelegt werden.

In noch weiteren Anwendungsmöglichkeiten kann die Spritzgießmaschine betrieben werden, wenn mit der Heißläuferplatte zwei Werkzeughälften gekoppelt sind. Dabei ist in jedem Arbeitstakt, d.h. sowohl bei der Belegung mit Schmelze der stationären bzw. festen Werkzeughälfte wie auch beim Zusammenfahren zweier Werkzeughälften, immer eine Werkzeughälfte außerhalb des Schließbereichs der Spritzgießmaschine positioniert und ist für Handlingsgeräte der verschiedensten Art frei zugänglich. Es ist beispielsweise die Möglichkeit gegeben fertige Spritzgießteile zu entnehmen, zu umspritzende Teile (z.B. Rahmen einer Automobilscheibe) einzulegen oder ein Bahnmaterial einzubringen.Grundsätzlich ist damit auch die Möglichkeit gegeben, mit der ersten beweglichen Werkzeughälfte und der stationären, mit Schmelze belegten Werkzeughälfte ein erstes flächiges Spritzgießteil herzustellen, das anschließend nochmals mit Schmelze aus der Heißläuferplatte belegt wird, die dann mit der zweiten beweglichen Werkzeughälfte verpreßt wird. Um nur eine der vielfältigen Variationsmöglichkeiten zu nennen, können mit dem zweiten beweglichen Werkzeugteil und der zweiten Schmelzeschicht die unterschiedlichsten Einlegematerialien mitverpreßt werden, wie Rahmen, Griffteile, Scharnierelemente oder dergleichen.

Die Erfindung wird nachstehend anhand von schematisch dargestellten Ausführungsbeispielen erläutert. Es zeigt:
- Fig. 1a: die Seitenansicht einer vertikalen Spritzgießmaschine mit eingefahrener Heißläuferplatte und ausgefahrener beweglicher Werkzeughälfte,
- Fig. 1b: die Draufsicht auf die Spritzgeißmaschine gemäß der Schnittlinie A-A in Fig. 1a,
- Fig. 2a und 2b: die Spritzgießmaschine nach Fig. 1a und Fig. 1b mit ausgefahrener Heißläuferplatte und eingefahrener beweglicher Werkzeughälfte,
- Fig. 3: eine Spritzgießmaschine nach Fig. 1a mit zwei fest mit der Heißläuferplatte gekoppelten beweglichen Werkzeughälften,
- Fig. 4a: die Seitenansicht einer vertikalen Spritzgießmaschine mit einer zusammen mit der Heißläuferplatte hin- und herfahrbaren Plastifiziereinheit und
- Fig. 4b: die Spritzgießmaschine nach Fig. 4a jedoch mit ausgefahrener Heißläuferplatte und teilabgesenkter weiter Werkzeughälfte.

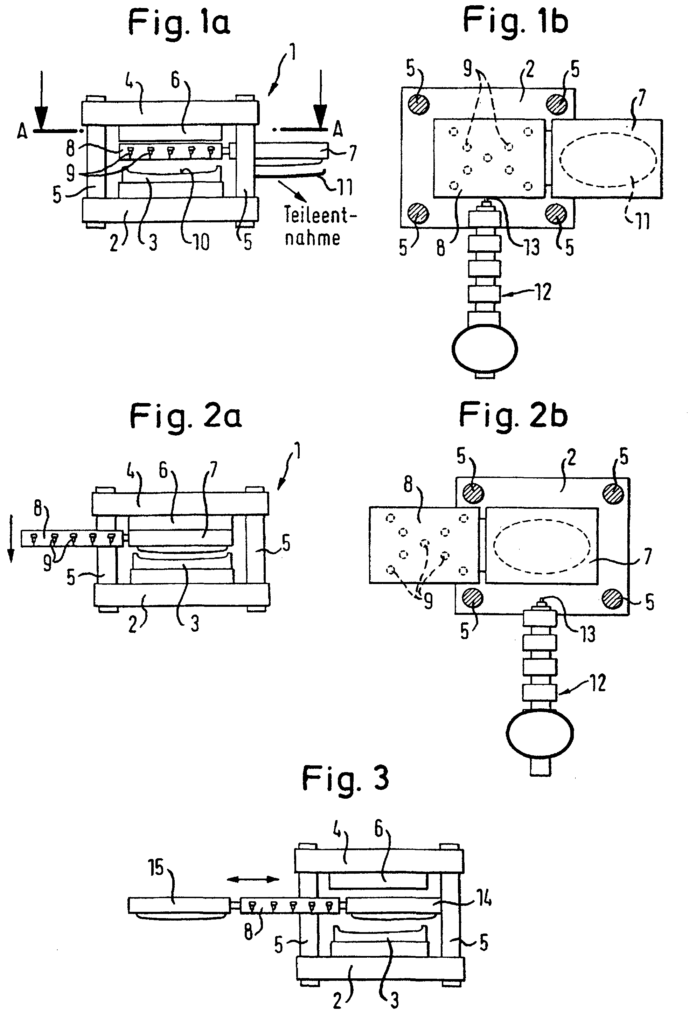

Die in Fig. 1a und 1b schematisch dargestellte Spritzgießmaschine ist eine Zweiplattenspritzgießmaschine mit einer festen Werkzeugaufspannplatte 2, mit einer festen Werkzeughälfte 3 und einer beweglichen Werkzeugaufspannplatte 4, die mit der festen Werkzeugaufspannplatte 2 über Zug- und Führugnsholme 5 verbunden ist. Die bewegliche Werkzeugaufspannplatte 4 trägt eine Halteplatte 6 für die zweite bewegliche Werkzeughälfte 7, die fest mit einer Heißläuferplatte 8 verbunden ist. Die Heißläuferplatte 8 weist eine Anzahl von Nadelverschlußdüsen 9 auf und ist oberhalb der Formoberfläche 10 der festen Werkzeughälfte 3 positioniert. Die bewegliche Werkzeughälfte 7 befindet sich außerhalb des Schließbereichs der Spritzgießmaschine 1 in einer Stellung in der das fertige Spritzgießteil 11 entnommen werden kann. Die Plastifiziereinheit 12 ist zum Zweck der deutlicheren Darstellung nur in Fig. 1b gezeigt. Sie wird mit der Spritzdüse 13 in der in den Figuren 1a und 1b dargestellten Position der Heißläuferplatte 8 jeweils an diese zur Schmelzeversorgung angedockt.

Die Fig. 2a und 2b zeigen die Spritzgießmaschine 1 mit aus dem Schließbereich ausgefahrener Heißläuferplatte 8 und mit der auf der Halteplatte 6 der beweglichen Werkzeugaufspannplatte 4 fest verankerten beweglichen Werkzeughälfte 7. Die Plastifiziereinheit 12 befindet sich in zurückgefahrener Stellung.

Beim Betrieb der Spritzgießmaschine nach den Figuren 1a bis 2b werden die Heißläuferplatte 8 und die bewegliche Werkzeughälfte 7 im Wechseltakt zur festen Werkzeughälfte 3 positioniert, wobei die Heißläuferplatte 8 die Formoberfläche 10 der festen Werkzeughälfte 3 flächig mit Schmelze belegt und die bewegliche Werkzeughälfte 7 beim Absenken auf die feste Werkzeughälfte 3 die Schmelze in alle Bereiche der von den beiden Werkzeughälften 3 und 7 eingeschlossenen Werkzeugkavität verpreßt.

Die flächige Belegung der Formoberfläche 10 erfolgt über die Anzahl der Nadelverschlußdüsen 9, die unter Umständen kaskadenartig so angeesteuert werden, daß sich ein geschlossener Schmelzebelag ohne Einschluß von optisch störenden Blasen oder Bindenähten ergibt.

Die Spritzgießmaschine nach Fig. 3 entspricht der Spritzgießmaschine 1 nach Fig. 1a bis 2b, die Heißläuferplatte 8 ist jedoch anstatt mit einer mit zwei beweglichen Werkzeughälften 14 und 15 verbunden. Die Spritzgießmaschine kann danach im dreifachen Wechseltakt betrieben werden.

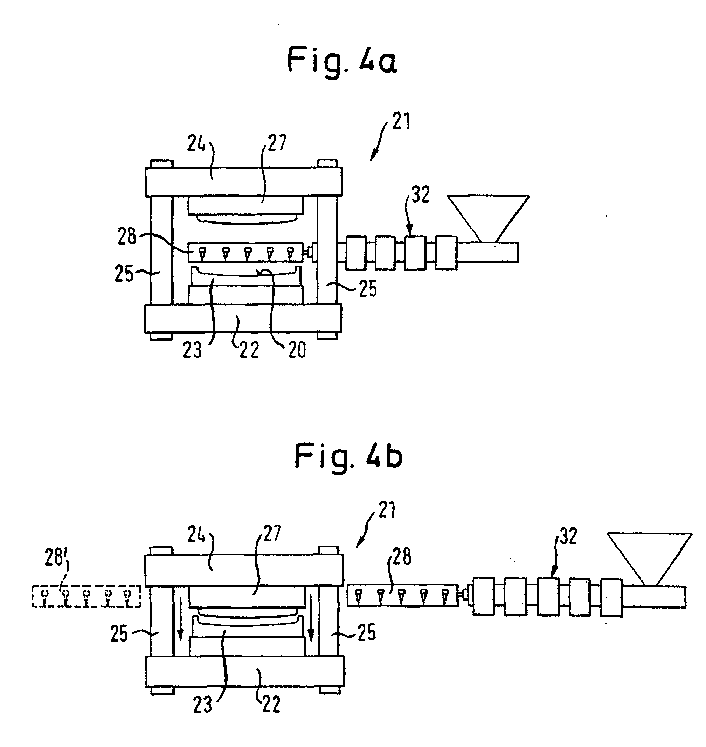

Die in den Figuren 4a und 4b dargestellte Spritzgießmaschine 21 ist ebenfalls eine Zweiplattenspritzgießmaschine mit einer festen Werkzeugaufspannplatte 22 , mit einer festen Werkzeughälfte 23 und einer beweglichen Werkzeugaufspannplatte 24, die mit der festen Werkzeugaufspannplatte 22 über Zug- und Führungsholme 25 verbunden ist. Die bewegliche Werkzeugaufspannplatte 24 trägt einer zweite Werkzeughälfte 27.

In den Raum zwischen den geöffneten Werkzeughälften 23 und 27 ist eine Heißläuferplatte 28 eingefahren, die mit einer Plastifiziereinheit 32 fest verbunden ist. In dieser Position wird die Formoberfläche 20 der festen Werkzeughälfte 23 flächig mit Schmelze belegt. In der Darstellung nach Fig. 4b befindet sich die Heißläuferplatte 28 außerhalb des Schließbereiches der Spritzgießmaschine 21 und die bewegliche Werkzeughälfte 27 befindet sich auf dem Weg zur Schließposition auf der festen Werkzeughälfte 23.

Wie in unterbrochenen Linien dargestellt, kann die Heißläuferplatte 28' auch unabhängig von der Plastifiziereinheit 32 zyklusweise in den Raum zwischen den geöffneten Werkzeughälften eingefahren und dort mit der Plastifiziereinheit gekoppelt werden. Nach der Belegung der Formoberfläche 20 der festen Werkzeughälfte 23 mit Schmelze kann dann die Heißläuferplatte 28' in entgegengesetzter Richtung zur Plastifiziereinheit 32 wieder aus dem Schließbereich herausgefahren werden.

### Bezugszeichenliste

- 1, 21: Spritzgießmaschine
- 2, 22: feste Werkzeugaufspannplatte
- 3, 23: feste Werkzeughälfte
- 4, 24: bewegliche Werkzeugaufspannplatte
- 5, 25: Zu- und Führungsholme
- 6: Halteplatte
- 7, 14, 15, 27: bewegliche Werkzeughälfte
- 8, 28, 28': Heißläuferplatte
- 9: Nadelverschlußdüse
- 10, 20: Formoberfläche
- 11: Spritzgießteil
- 12, 32: Plastifiziereinheit
- 13: Spritzdüse

## Patentansprüche

1. Verfahren zum Herstellen von Spritzgießteilen in einer Spritzgießmaschine (1, 21) mit einem zwei Werkzeughälften (3, 7, 14, 15, 23, 27) aufweisenden Spritzgießwerkzeug (8, 28, 28'), bei dem bei geöffnetem Spritzgießwerkzeug mittels einer Schmelzezuführeinrichtung Schmelze auf die Formoberfläche (10, 20) einer Werkzeughälfte (3, 23) aufgebracht wird und bei dem anschließend die Schmelze durch ein Zusammenfahren der Werkzeughälften (3, 7, 14, 15, 23, 27) bis in alle Bereiche der Werkzeugkavität verpresst wird, **dadurch gekennzeichnet, dass** die Schmelze mit einer über der Formoberfläche (10, 20) der Werkzeughälfte (3, 23) positionierten Heißläuferplatte (8, 28 ,28') auf die Formoberfläche aufgegeben wird.

2. Verfahren nach Anspruch 1, **dadurch gekennzeichnet, dass** die Formoberfläche (10, 20) der Werkzeughälfte (3, 23) vor dem Aufbringen der Schmelze mit einer Lage eine Bahnmaterials belegt wird.

3. Vorrichtung zum Herstellen von Spritzgießteilen einer Spritzgießmaschine (1, 21) mit einem zwei Werkzeughälften (3, 7, 14, 15, 23, 27) aufweisenden Spritzgießwerkzeug und mit einer Schmelzezuführeinrichtung (8, 28, 28') zum Aufbringen von Schmelze auf die Formoberfläche (10, 20) einer Werkzeughälfte (3, 23), **dadurch gekennzeichnet, dass** die Schmelzezuführeinrichtung (8, 28, 28') zwischen das geöffnete Spritzgießwerkzeug ein- und ausfahrbar ist und aus einer Heißläuferplatte (8, 28, 28') besteht, die eine oder mehrere Schmelzezuführdüsen (9) aufweist.

4. Vorrichtung nach Anspruch 3, **dadurch gekennzeichnet, dass** die Schmelzezuführdüsen Nadelverschlussdüsen (9) sind.

5. Vorrichtung nach Anspruch 4, **dadurch gekennzeichnet, dass** die Nadelverschlussdüsen (9) mittels einer Kaskadensteuerung ansteuerbar sind.

6. Vorrichtung nach einem der Ansprüche 3 bis 5, **dadurch gekennzeichnet, dass** die Heißläuferplatte (8, 28, 28') in der über der Formoberfläche (10, 20) der festen Werkzeughälfte (3, 23) befindliche Position mit der Düse der Plastifiziereinheit (12, 32) der Spritzgießmaschine (1, 21) gekoppelt ist.

7. Vorrichtung nach einem der Ansprüche 3 bis 5, **dadurch gekennzeichnet, dass** die Heißläuferplatte (28) fest mit der Plastifiziereinheit (32) verbunden und mit dieser hin- und herfahrbar ist.

8. Vorrichtung nach einem der Ansprüche 3 bis 5, **dadurch gekennzeichnet, dass** die Heißläuferplatte (8) fest mit der beweglichen Werkzeughälfte (7) verbunden ist und mit dieser als eine Funktionseinheit im zweifachen Wechseltakt über der mit Schmelze zu belegenden Werkzeughälfte positionierbar ist.

9. Vorrichtung nach einem der Ansprüche 3 bis 5, **dadurch gekennzeichnet, dass** die Heißläuferplatte (8) fest mit zwei beweglichen Werkzeughälften (14, 15) verbunden ist, und mit diesen als eine Funktionseinheit im dreifachen Wechseltakt über der mit Schmelze zu belegenden Werkzeughälfte(3) positionierbar ist.

10. Vorrichtung nach Anspruch 8 oder 9, **dadurch gekennzeichnet, dass** an den Positionen, an denen sich die eine Werkzeughälfte (7) oder die beiden beweglichen Werkzeughälften (14, 15) befinden, wenn sich die Heißläuferplatte (8) über der Formoberfläche (10) der ortsfesten Werkzeughälfte (3) befindet, Entnahmevorrichtungen für fertige Spritzgießteile (11) angeordnet sind.

11. Vorrichtung nach einem der Ansprüche 8 bis 10, **dadurch gekennzeichnet, dass** an den Positionen an denen sich die Werkzeughälfte (7) oder die Werkzeughälften (14, 15) befinden, wenn sich die Heißläuferplatte (8) über der Formoberfläche (10) der ortsfesten Werkzeughälfte (3) befindet, Vorrichtungen zur Belegung der Formoberfläche der einen beweglichen Werkzeughälfte (7) oder einer oder beider Formoberflächen der zwei beweglichen Werkzeughälften (14, 15) mit Einlegematerial angeordnet sind.

12. Vorrichtung nach den Ansprüchen 1 bis 11, **dadurch gekennzeichnet, dass** die Spritzgießmaschine ein vertikal bewegbares Schließsystem und Werkzeughälften mit horizontaler Formtrennebene aufweist.

## Claims

1. A method of producing injection-moulded parts in an injection-moulding machine (1,21), having an injection-moulding mould (8,28,28') with two halves (3,7,14,15,23,27), where molten matter is applied to the mould surface (10,20) of a mould half (3,23) by means of a device supplying molten matter when the injection-moulding mould is open and where subsequently the molten matter is pressed into all areas of the mould cavity by a bringing together of mould halves (3,7,14,15,23,27)
**characterised in that** the molten matter is delivered to the mould surface by means of a hot box plate (8,28,28') positioned over the mould surface (10,20) of mould half (3,23).

2. A method according to claim 1, **characterised in that** the mould surface (10,20) of mould half (93,23) is coated with a layer of material before applying the molten matter.

3. A device for producing injection-moulded parts of an injection-moulding machine (1,21), having an injection-moulding mould with two mould halves (3,7,14,15,23,27) and a device (8,28,28') supplying molten matter for applying same to the mould surface (10,20) of a mould half (3,23), **characterised in that** the device (8,28,28') supplying molten matter can be pushed in and pulled out between the open injection-moulding mould, and is comprised of a hot box plate (8,28,28') which has one or more nozzles supplying molten matter.

4. A device according to claim 3, **characterised in that** the nozzles supplying the molten matter are needle shut-off nozzles (9).

5. A device according to claim 4, **characterised in that** the needle shut-off nozzles (9) can be controlled by means of a cascade control.

6. A device according to any of claims 3-5, **characterised in that** hot box plate (8,28,28') is coupled to the nozzle of injection-moulding machine (1,21) plasticising unit (12,32) when found above mould surface (10,20) of fixed mould half (3,23).

7. A device according to any of claims 3-5, **characterised in that** hot box plate (28) is securely joined to plasticising unit (32) and can be moved to and fro with same.

8. A device according to any of claims 3-5, **characterised in that** hot box plate (8) is securely joined to mobile mould half (7), and with this can be positioned as a functioning unit in alternating double contact over the mould half to be coated with molten matter.

9. A device according to any of claims 3-5, **characterised in that** hot box plate (8) is securely connected to two mobile mould halves (14,15), and can be positioned as a functioning unit in alternating triple contact over the mould half (3) to be coated with molten matter.

10. A device according to claims 8 or 9, **characterised in that** removal devices for the finished injection-moulded parts (11) are arranged in positions in which one mould half (7) or two mobile mould halves (14,15) find themselves, when hot box plate (8) is found over the mould surface (10) of fixed mould half (3).

11. A device according to any of claims 8-10, **characterised in that** devices for coating the mould surface of one mobile mould half (7) or one or both mould surfaces of the two mobile mould halves (14,15) with inlay material, are arranged in positions in which mould half (7) or mould halves (14,15) find themselves when hot box plate (8) is found over mould surface (10) of fixed mould half (3).

12. A device according to any of claims 1-11, **characterised in that** the injection-moulding machine has a vertically mobile closing system and mould halves have a horizontal mould separating plane.

## Revendications

1. Procédé de fabrication de pièces moulées par injection dans une machine à mouler par injection (1, 21) avec un outil de moulage par injection (8, 28, 28') comprenant deux moitiés d'outil (3, 7, 14, 15, 23, 27), dans lequel, une fois l'outil de moulage par injection ouvert, une masse fondue est appliquée au moyen d'un dispositif d'amenée de masse fondue à la surface du moule (10, 20) d'une moitié d'outil (3, 23) et dans lequel la masse fondue est ensuite compressée en réunissant les moitiés d'outil (3, 7, 14, 15, 23, 27) jusque dans les moindres zones de la cavité de l'outil, **caractérisé en ce que** la masse fondue est appliquée avec une plaque de boîte chaude (8, 28, 28') positionnée au-dessus de la surface du moule (10, 20) de la moitié d'outil (3, 23) à la surface du moule.

2. Procédé selon la revendication 1, **caractérisé en ce que** la surface du moule (10, 20) de la moitié d'outil (3, 23) est recouverte, avant application de la masse fondue, d'une couche de matériau en bande.

3. Dispositif de fabrication de pièces moulées par injection d'une machine à mouler par injection (1, 21) avec un outil de moulage par injection comprenant deux moitiés d'outil (3, 7, 14, 15, 23, 27) et un dispositif d'amenée de masse fondue (8, 28, 28') pour appliquer une masse fondue à la surface du moule (10, 20) d'une moitié d'outil (3, 23), **caractérisé en ce que** le dispositif d'amenée de masse fondue (8, 28, 28') peut être inséré et déplié entre l'outil de moulage par injection ouvert et est constitué d'une plaque de boîte chaude (8, 28, 28') comprenant une ou plusieurs buses d'amenée de masse fondue (9).

4. Dispositif selon la revendication 3, **caractérisé en ce que** les buses d'amenée de masse fondue sont des buses à obturateur à aiguille (9).

5. Dispositif selon la revendication 4, **caractérisé en ce que** les buses à obturateur à aiguille (9) peuvent être pilotées au moyen d'une commande en cascade.

6. Dispositif selon l'une des revendications 3 à 5, **caractérisé en ce que** la plaque de boîte chaude (8, 28, 28') est couplée, dans la position située au-dessus de la surface du moule (10, 20) de la moitié d'outil fixe (3, 23), à la buse de l'unité de plastification (12, 32) de la machine à mouler par injection (1, 21).

7. Dispositif selon l'une des revendications 3 à 5, **caractérisé en ce que** la plaque de boîte chaude (28) est reliée de manière fixe à l'unité de plastification (32) et peut être rentrée et sortie avec celle-ci.

8. Dispositif selon l'une des revendications 3 à 5, **caractérisé en ce que** la plaque de boîte chaude (8) est reliée de manière fixe à la moitié d'outil mobile (7) et peut être positionnée avec celle-ci en tant qu'unité fonctionnelle à une cadence alternée double au-dessus de la moitié d'outil à recouvrir de masse fondue.

9. Dispositif selon l'une des revendications 3 à 5, **caractérisé en ce que** la plaque de boîte chaude (8) est reliée de manière fixe à deux moitiés d'outil mobiles (14, 15) et peut être positionnée avec celles-ci en tant qu'unité fonctionnelle à une cadence alternée triple au-dessus de la moitié d'outil (3) à recouvrir de masse fondue.

10. Dispositif selon la revendication 8 ou 9, **caractérisé en ce que** des dispositifs de prélèvement des pièces moulées par injection achevées (11) sont disposés à des emplacements où se trouvent l'une des moitiés d'outil (7) ou les deux moitiés d'outil mobiles (14, 15) lorsque la plaque de boîte chaude (8) se trouve au-dessus de la surface du moule (10) de la moitié d'outil fixe.

11. Dispositif selon l'une des revendications 8 à 10, **caractérisé en ce que** des dispositifs de revêtement de la surface du moule de l'une des moitiés d'outil mobiles (7) ou de l'une ou des deux surfaces du moule des deux moitiés d'outil mobiles (14, 15) avec un matériau de revêtement sont positionnés à des emplacements où se trouvent la moitié d'outil (7) ou les moitiés d'outil (14, 15) lorsque la plaque de boîte chaude (8) se trouve au-dessus de la surface du moule (10) de la moitié d'outil fixe (3).

12. Dispositif selon les revendications 1 à 11, **caractérisé en ce que** la machine à mouler par injection comporte un système de fermeture qui peut être déplacé verticalement et des moitiés d'outil dont le plan de démoulage est horizontal.
